# EUROPEAN PATENT SPECIFICATION

(11) **EP 1 186 840 B1**
(45) Date of publication and mention of the grant of the patent: **15.12.2004**
(21) Application number: 01121430.1
(22) Date of filing: 07.09.2001
(51) Int. Cl.: F25B 45/00, F25B 49/02, B60H 1/32, F25B 49/00

(54) **A method and a system for monitoring the state of filling of a motor-vehicle air-conditioning system**
Verfahren und Vorrichtung zur Überwachung des Füllungszustandes einer Kraftfahrzeugklimaanlage
Procédé et système pour la surveillance du niveau de remplissage d'un système de climatisation d'un véhicule automobile

(30) Priority: 12.09.2000 IT TO000857
(43) Date of publication of application: 13.03.2002
(73) Proprietor: C.R.F. Società Consortile per Azioni, 10043 Orbassano (Torino) (IT)
(72) Inventor: Melisurgo, Vito, 10135 Torino (IT)
(74) Representative: Quinterno, Giuseppe

(56) References cited:
- EP-A- 1 008 816
- WO-A-94/16273
- DE-C- 19 542 890
- US-A- 4 848 096
- US-A- 5 009 076
- US-A- 5 044 168
- US-A- 5 152 152
- US-A- 5 186 014
- US-A- 6 098 412

## Description

The present invention relates to a method of monitoring the state of filling of a motor-vehicle air-conditioning system comprising a fluid circuit, including:
a compressor which can be connected to the internal combustion engine of the motor vehicle and the output of which is connected to a condenser, and
an evaporator with which a fan is associated and which has its input connected to the output of the condenser by means of a fluid-expansion device and its output connected to the input of the compressor.

The state of filling of the fluid circuit of an air-conditioning system varies during the life of the system, for various reasons.

At the manufacturing stage, any substantial leakages of fluid resulting from constructional and/or assembly defects can easily be detected.

However, small leakages of fluid such as those due to deterioration of the components or to corrosion are much less easy to detect. These leakages lead to a progressive reduction in the filling level and a corresponding deterioration in the performance of the system (or even damage to the compressor) and lead to the release of hazardous fluids into the environment.

In conventional motor vehicles, the operation of the compressor of the air-conditioning system is prevented when the pressure of the fluid in the system falls below a predetermined threshold, for example about 3.1 bar, at rest. However, in the event of fluid leakages, the compressor is prevented from operating when the quantity of fluid remaining in the system is already quite low and in the almost completely gaseous state, so that the prevention of the operation of the compressor cannot generally prevent damage thereto.

Various methods of monitoring the state of filling of an air-conditioning system are known. For the most part, these methods are based on a comparison of the values adopted by some parameters or the performance of the system (such as overheating, evaporation pressure, or refrigerating capacity) which are monitored during operation, with recorded reference values relating to a state of filling which is considered optimal. Solutions of this type are described, for example in United States patents Nos. 5,457,965, 5,009,076 and 4,677,830.

These methods are not applicable to motor-vehicle cooling systems since, in the latter, in contrast with fixed systems, the environmental and operating conditions (speed of travel, internal ventilation conditions, etc.) are extremely variable so that the definition of "normal" reference operating conditions is quite difficult or at least complex.

A method and apparatus for monitoring the state of filling of an air conditioning system in a motor-vehicle is known from document WO-A-9 416 273.

The aim of the present invention is therefore to propose a method which enables the state of filling of an air-conditioning system installed in a motor vehicle to be monitored in a reliable, simple, and economical manner.

This and other aims are achieved, according to the invention, by the method the main characteristics of which are defined in appended Claim 1.

The invention also consists of a system for performing the monitoring of the state of filling of a motor-vehicle air-conditioning system, the main characteristics of which are defined in Claim 9.

Further characteristics and advantages of the invention will become clear from the following detailed description, given purely by way of example, with reference to the appended drawings, in which:
Figure 1 is a schematic view of a motor-vehicle air-conditioning system with which a system according to the invention for monitoring its state of filling is associated, and
Figure 2 is a graph which shows the curves of two pressure signals usable in a monitoring system according to the invention, as functions of time, given on the abscissa.

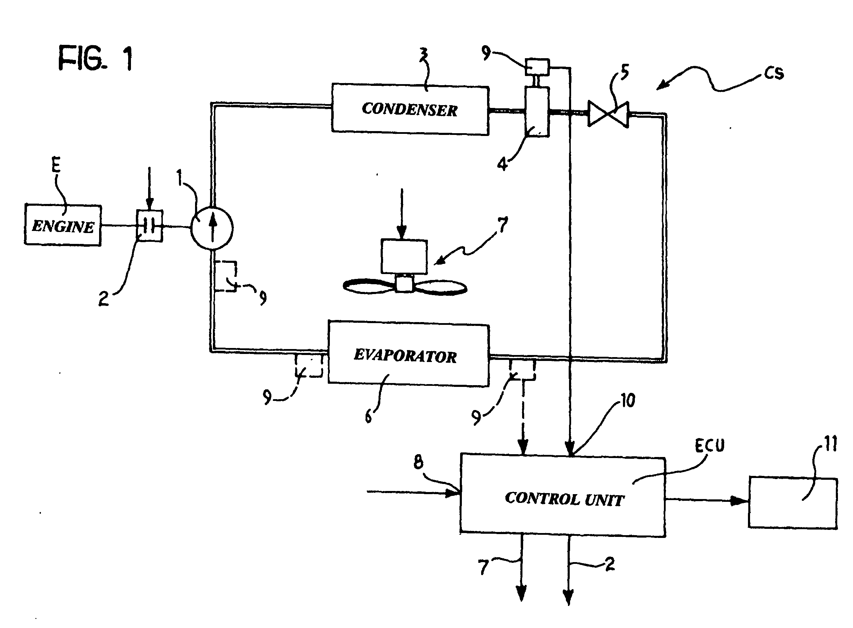

In Figure 1, the internal combustion engine of a motor vehicle is indicated E and an air-conditioning system installed in the motor vehicle is generally indicated CS.

The air-conditioning system CS comprises, in a per se known manner, a compressor 1 which can be driven by the internal combustion engine E, by means of an electrically-operated coupling 2. The output of the compressor 1 is connected to the input of a condenser 3. The output of the condenser is connected to a filter 4 downstream of which there is a fluid-expansion device 5. This device may be, for example, an expansion valve, or even simply a calibrated opening.

The expansion device 5 is connected to the input of an evaporator 6 the output of which is connected to the input of the compressor 1.

An electric fan 7 is associated with the evaporator 6.

A monitoring system is associated with the air-conditioning system CS for monitoring its state of filling. The monitoring system comprises, basically, an electronic control unit ECU which is arranged to control the operation of the coupling 2 and of the electric fan 7 associated with the evaporator, in accordance with predetermined methods.

Signals indicative of the rate of rotation of the engine E reach an input 8 of the control unit ECU. These signals may be signals which reach the unit ECU from a sensor associated with the engine E, or signals indicative of this rate and coming from the electronic engine-management unit or from a network for the distribution of signals in the motor vehicle, such as a network operating in accordance with the CAN protocol.

The system for monitoring the state of filling of the air-conditioning system CS also comprises (at least) one electric pressure sensor 9 connected to an input 10 of the control unit ECU. This sensor is, for example, an analog sensor.

In a first embodiment of the system, the pressure sensor 9 is associated with the high-pressure branch of the refrigeration circuit of the air-conditioning system and is thus located upstream of the expansion device 5, typically downstream of the condenser 3, and is, for example, associated with the filter 4.

In order to monitor the state of filling of the system, the control unit ECU is arranged to bring about, every so often, for example, each time the engine E is switched on and started, activation of the compressor 1 for a predetermined period of time (for example, 10 seconds) whilst the engine E is rotating at a substantially constant rate (for example, at idling speed) and whilst the fan 7 associated with the evaporator 6 is kept deactivated. After this period of time, the unit ECU brings about deactivation of the compressor 1 (by means of the coupling 2).

The unit ECU detects the behaviour of the fluid pressure indicated by the sensor 9.

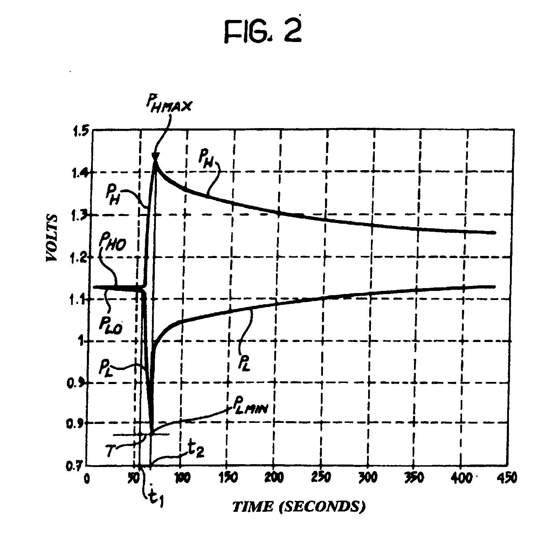

If the pressure sensor 9 is associated with the high-pressure branch of the refrigeration circuit, the curve of the signal provided by this sensor is, for example that indicated P_{H} in Figure 2. The signal P_{H} adopts a rest value P_{H0} prior to the activation of the compressor 1, which is brought about by the unit ECU at a moment t₁.

The compressor 1 is kept activated up to a subsequent moment t₂, and hence for a predetermined period of time T = t₂ - t₁, for example, of 10 seconds, as stated above.

At the moment t₂, the unit ECU brings about deactivation of the compressor 1 and the pressure indicated by the sensor 9 starts to decrease, starting from the maximum value P_{Hmax} reached at the moment t₂, and tending to return progressively to the rest value P_{H0}.

The curve indicated P_{L} in Figure 2 is that of the voltage output by the sensor 9 which is indicative of the pressure of the fluid in the hydraulic circuit if the sensor is associated with the low-pressure branch of the refrigeration circuit, and hence if the sensor is located downstream of the expansion device 5, for example, in one of the three positions shown in broken outline in Figure 1, that is, at the input or at the output of the evaporator 6 or in the vicinity of the input of the compressor 1. In this case, when the unit ECU for detecting the state of filling of the system activates the compressor 1 at the moment t₁, the pressure of the fluid starts to decrease from the rest value P_{L0} (which, in practice, is equal to P_{H0}) as shown in Figure 2, to a minimum value P_{Lmin} reached at the moment t₂ at which the unit ECU brings about deactivation of the compressor. Starting from this moment, the pressure P_{L} tends to return progressively to the rest value P_{L0}.

Tests carried out have shown that all of the values P_{Hmax}, P_{Lmin}, P_{Hmax/}P_{H0}, P_{Lmax}/P_{L0} P_{Hmax}-P_{H0}, P_{Lmin}-P_{L0} and the relaxation times of P_{H} and P_{L} (after t₂) are indicative of the quantity (mass) of refrigerant fluid contained in the circuit of the system.

The unit ECU is therefore advantageously arranged to compare the value adopted by one or more of the above-mentioned parameters with reference values predetermined experimentally for the specific system, and to activate an indicator device 11 (Figure 1) when this comparison is indicative of an insufficient level of filling of the system. The indicator device 11 may alternatively be activated after a predetermined number of consecutive indications of an insufficient filling level.

As stated above, during the period of time T = t₂-t₁ in which the compressor 1 is activated for the purposes of detecting the state of filling of the system, the electric fan 7 associated with the evaporator is kept deactivated. Alternatively, however, the control unit ECU could be arranged to control the electric fan 7 during the period of time T in a manner such that it conveys a predetermined, substantially constant air-flow onto the evaporator.

Naturally, the principle of the invention remaining the same, the forms of embodiment and details of construction may be varied widely with respect to those described and illustrated purely by way of example, without thereby departing from the scope of the invention as defined in the appended claims.

## Claims

1. A method of monitoring the state of filling of an air-conditioning system (CS) for a motor vehicle, the system (CS) comprising a fluid circuit, including:
a compressor (1) which can be connected to the internal combustion engine (E) of the motor vehicle and the output of which is connected to a condenser (3), and
an evaporator (6) with which a fan (7) is associated and which has its input connected to the output of the condenser (3) by means of a fluid-expansion device (5) and its output connected to the input of the compressor,
the method being **characterized in that**:
- the compressor (1) is activated for a predetermined period of time (T) whilst the engine (E) of the motor vehicle is rotating at a predetermined, substantially constant, rate and whilst the fan (7) associated with the evaporator (6) is controlled in a manner such that it conveys a substantially constant, or even zero, air-flow onto the evaporator (6), and the compressor (1) is then deactivated,
- the value of at least one predetermined characteristic of the resulting curve of the fluid pressure upstream (P_{H}) and/or downstream (P_{L}) of the expansion device (5) with time is detected, and
- this characteristic is compared with a predetermined reference value.

2. A method according to Claim 1 in which the predetermined characteristic is the maximum or minimum value (P_{Hmax}, P_{Lmin}) reached by the fluid pressure upstream or downstream respectively of the expansion device (5).

3. A method according to Claim 1 in which the predetermined characteristic is a function of or the ratio between the maximum or minimum value (P_{Hmax}, P_{Lmin}) reached by the fluid pressure upstream or downstream respectively of the expansion device (5) and the value (P_{H0}; P_{L0}) adopted by the pressure prior to the activation of the compressor (1).

4. A method according to Claim 2 or Claim 3 in which the maximum value (P_{Hmax}) reached by the fluid pressure (P_{H}) downstream of the condenser (3) is detected.

5. A method according to Claim 2 or Claim 3 for a system (CS) in which a fluid filter (4) is disposed at the output from the condenser (3) and in which the maximum value (P_{Hmax}) reached by the fluid pressure in the filter (4) is detected.

6. A method according to Claim 2 or Claim 3 in which the minimum value (P_{Lmin}) reached by the fluid pressure (P_{L}) in the vicinity of the input or the output of the evaporator (6) is detected.

7. A method according to Claim 2 or Claim 3 in which the minimum value (P_{Lmin}) reached by the fluid pressure (P_{L}) in the vicinity of the input of the compressor is detected.

8. A method according to Claim 1 in which the predetermined characteristic is a function of, or the relaxation time of, the fluid pressure (P_{H}, P_{L}) upstream or downstream of the expansion device (5), after the deactivation of the compressor (1).

9. A system for monitoring the state of filling of an air-conditioning system (CS) of a motor vehicle which comprises a fluid circuit including:
- a compressor (1) which can be connected to the internal combustion engine (E) of the motor vehicle and the output of which is connected to a condenser (3), and
- an evaporator (6) with which a fan (7) is associated and which has its input connected to the output of the condenser (3) by means of a fluid-expansion device (5) and its output connected to the input of the compressor (1),
the system being **characterized in that** it comprises:
- a control unit (ECU) which can bring about controlled activation of the compressor (1) whilst the engine (E) of the motor vehicle is rotating at a predetermined, substantially constant, rate and whilst the fan (7) is controlled in a manner such that it conveys a substantially constant, or even zero, air-flow onto the evaporator (6), and then deactivation of the compressor (1),
- sensor means (9) for supplying to the control unit (ECU) electrical signals indicative of the fluid pressure (P_{H}, P_{L}) upstream and/or downstream of the expansion device (5),
- the control unit (ECU) being arranged to detect at least one characteristic of the curve of the fluid pressure upstream and/or downstream of the expansion device (5) with time, resulting from the activation of the compressor (1), and to compare this characteristic with a predetermined reference value.

10. A system according to Claim 9 in which the predetermined characteristic is the maximum or minimum value (P_{Hmax}, P_{Lmin}) reached by the fluid pressure upstream or downstream respectively of the expansion device (5).

11. A system according to Claim 9 in which the predetermined characteristic is a function of or the ratio between the maximum or minimum value (P_{Hmax}, P_{Lmin}) reached by the fluid pressure upstream or downstream respectively of the expansion device (5) and the value (P_{H0}; P_{L0}) adopted by the pressure prior to the activation of the compressor (1).

12. A system according to Claim 10 or Claim 11 in which the sensor means (9) are arranged in a manner such as to supply signals indicative of the fluid pressure (P_{H}) downstream of the condenser (3).

13. A system according to Claim 10 or Claim 11, for a system in which a fluid filter (4) is disposed at the output of the condenser (3) and in which the sensor means (9) are associated with the filter (4).

14. A system according to Claim 10 or Claim 11 in which the control unit (ECU) is arranged to detect the minimum value reached by the fluid pressure in the vicinity of the input or the output of the evaporator (6).

15. A system according to Claim 10 or Claim 11 in which the control unit (ECU) is arranged to detect the minimum value reached by the fluid pressure in the vicinity of the input of the compressor (1).

16. A system according to Claim 9 in which the predetermined characteristic is a function of, or the relaxation time of, the fluid pressure (P_{H}, P_{L}) upstream or downstream of the expansion device (5), after the deactivation of the compressor (1).

## Patentansprüche

1. Verfahren zum Überwachen des Füllzustands einer Klimaanlage (CS) für ein Kraftfahrzeug, wobei die Anlage (CS) einen Fluidkreislauf umfasst, einschließlich:
eines Kompressors (1), der am Verbrennungsmotor (E) des Kraftfahrzeugs angeschlossen sein kann und dessen Ausgang an einem Kondensator (3) angeschlossen ist, und
eines Verdampfers (6), dem ein Gebläse (7) zugeordnet ist und der mit seinem Eingang mittels einer Fluidexpansionsvorrichtung (5) am Ausgang des Kondensators (3) und mit seinem Ausgang am Eingang des Kompressors angeschlossen ist,
wobei das Verfahren **dadurch gekennzeichnet ist, dass**:
- der Kompressor (1) für eine vorbestimmte Zeitdauer (T) aktiviert wird, während der Motor (E) des Kraftfahrzeugs mit einer vorbestimmten, im Wesentlichen konstanten Geschwindigkeit rotiert und während das zum Verdampfer (6) gehörige Gebläse (7) solcherart gesteuert wird, dass es dem Verdampfer (6) einen im Wesentlichen konstanten oder auch bei Null liegenden Luftstrom zufnhrt, und der Kompressor (1) danach deaktiviert wird,
- der Wert von zumindest einer vorbestimmten Eigenschaft der resultierenden Kurve des Fluiddrucks stromaufwärts (P_{H}) und/oder stromabwärts (P_{L}) von der Expansionsvorrichtung (5) mit der Zeit ermittelt wird, und
- diese Eigenschaft mit einem vorbestimmten Bezugswert verglichen wird.

2. Verfahren gemäß Anspruch 1, wobei die vorbestimmte Eigenschaft jener Höchstoder Mindestwert (P_{Hmax}, P_{Lmin}) ist, der vom Fluiddruck stromaufwärts bzw. stromabwärts von der Expansionsvorrichtung (5) erreicht wird.

3. Verfahren gemäß Anspruch 1, wobei die vorbestimmte Eigenschaft eine Funktion von oder das Verhältnis zwischen dem vom Fluiddruck stromaufwärts bzw. stromabwärts von der Expansionsvorrichtung (5) erreichten Höchst- oder Mindestwert (P_{Hmax}, P_{Lmin}) und dem vor der Aktivierung des Kompressors (1) vom Druck angenommenen Wert (P_{H0}; P_{L0}) ist.

4. Verfahren gemäß Anspruch 2 oder Anspruch 3, wobei der vom Fluiddruck (P_{H}) stromabwärts vom Kondensator (3) erreichte Höchstwert (P_{Hmax}) ermittelt wird.

5. Verfahren gemäß Anspruch 2 oder Anspruch 3 für eine Anlage (CS), bei welcher am Ausgang aus dem Kondensator (3) ein Fluidfilter (4) angeordnet ist und bei welcher der vom Fluiddruck im Filter (4) erreichte Höchstwert (P_{Hmax}) ermittelt wird.

6. Verfahren gemäß Anspruch 2 oder Anspruch 3, wobei der Mindestwert (P_{Lmin}) ermittelt wird, der vom Fluiddruck (P_{L}) in der Nähe des Eingangs oder des Ausgangs des Verdampfers (6) erreicht wird.

7. Verfahren gemäß Anspruch 2 oder Anspruch 3, wobei der Mindestwert (P_{Lmin}) ermittelt wird, der vom Fluiddruck (P_{L}) in der Nähe des Eingangs des Kompressors erreicht wird.

8. Verfahren gemäß Anspruch 1, wobei die vorbestimmte Eigenschaft eine Funktion oder die Entspannungszeit des Fluiddrucks (P_{H}, P_{L}) stromaufwärts oder stromabwärts von der Expansionsvorrichtung (5) nach der Deaktivierung des Kompressors (1) ist.

9. System zum Überwachen des Füllzustands einer Klimaanlage (CS) eines Kraftfahrzeugs, welche einen Fluidkreislauf umfasst, und zwar einschließlich:
- eines Kompressors (1), der am Verbrennungsmotor (E) des Kraftfahrzeugs angeschlossen sein kann und dessen Ausgang an einem Kondensator (3) angeschlossen ist, und
- eines Verdampfers (6), dem ein Gebläse (7) zugeordnet ist und der mit seinem Eingang mittels einer Fluidexpansionsvorrichtung (5) am Ausgang des Kondensators (3) und mit seinem Ausgang am Eingang des Kompressors (1) angeschlossen ist,
wobei das System **dadurch gekennzeichnet ist, dass** es Folgendes umfasst:
- eine Steuereinheit (ECU), die eine geregelte Aktivierung des Kompressors (1) bewirken kann, während der Motor (E) des Kraftfahrzeugs mit einer vorbestimmten, im Wesentlichen konstanten Geschwindigkeit rotiert und während das Gebläse (7) solcherart gesteuert wird, dass es dem Verdampfer (6) einen im Wesentlichen konstanten oder auch bei Null liegenden Luftstrom zuführt, und danach die Deaktivierung des Kompressors (1),
- Sensormittel (9), um der Steuereinheit (ECU) elektrische Signale zuzuführen, welche den Fluiddruck (P_{H}, P_{L}) stromaufwärts und/oder stromabwärts von der Expansionsvorrichtung (5) anzeigen,
- wobei die Steuereinheit (ECU) dazu eingerichtet ist, zumindest eine Eigenschaft der Kurve des Fluiddrucks stromaufwärts und/oder stromabwärts von der Expansionsvorrichtung (5) mit der Zeit zu ermitteln, welche aus der Aktivierung des Kompressors (1) resultiert, und diese Eigenschaft mit einem vorbestimmten Bezugswert zu vergleichen.

10. System gemäß Anspruch 9, bei welchem die vorbestimmte Eigenschaft jener Höchstoder Mindestwert (P_{Hmax}, P_{Lmin}) ist, der vom Fluiddruck stromaufwärts bzw. stromabwärts von der Expansionsvorrichtung (5) erreicht wird.

11. System gemäß Anspruch 9, bei welchem die vorbestimmte Eigenschaft eine Funktion von oder das Verhältnis zwischen dem vom Fluiddruck stromaufwärts bzw. stromabwärts von der Expansionsvorrichtung (5) erreichten Höchst- oder Mindestwert (P_{Hmax}, P_{Lmin}) und dem vor der Aktivierung des Kompressors (1) vom Druck angenommenen Wert (P_{H0}; P_{L0}) ist.

12. System gemäß Anspruch 10 oder Anspruch 11, bei welchem die Sensormittel (9) solcherart eingerichtet sind, um Signale zu liefern, welche den Fluiddruck (P_{H}) stromabwärts vom Kondensator (3) anzeigen.

13. System gemäß Anspruch 10 oder Anspruch 11 für eine Anlage, bei welcher am Ausgang des Kondensators (3) ein Fluidfilter (4) angeordnet ist und bei welcher die Sensormittel (9) dem Filter (4) zugeordnet sind.

14. System gemäß Anspruch 10 oder Anspruch 11, bei welchem die Steuereinheit (ECU) dazu eingerichtet ist, den Mindestwert zu ermitteln, der vom Fluiddruck in der Nähe des Eingangs oder des Ausgangs des Verdampfers (6) erreicht wird.

15. System gemäß Anspruch 10 oder Anspruch 11, bei welchem die Steuereinheit (ECU) dazu eingerichtet ist, den Mindestwert zu ermitteln, der vom Fluiddruck in der Nähe des Eingangs des Kompressors (1) erreicht wird.

16. System gemäß Anspruch 9, bei welchem die vorbestimmte Eigenschaft eine Funktion oder die Entspannungszeit des Fluiddrucks (P_{H}, P_{L}) stromaufwärts oder stromabwärts von der Expansionsvorrichtung (5) nach der Deaktivierung des Kompressors (1) ist.

## Revendications

1. Procédé pour surveiller le niveau de remplissage d'un système de climatisation (CS) pour un véhicule automobile, le système (CS) comprenant un circuit fluidique, incluant :
un compresseur (1) qui peut être raccordé au moteur à combustion interne (E) du véhicule automobile et dont la sortie est raccordée à un condenseur (3), et
un évaporateur (6), auquel est associé un ventilateur (7) et dont l'entrée est raccordée à la sortie du condenseur (3) au moyen d'un dispositif d'expansion de fluide (5) et dont la sortie est raccordée à l'entrée du compresseur,
le procédé étant **caractérisé en ce que** :
- le compresseur (1) est activé pendant un intervalle de temps prédéterminé (T) alors que le moteur (E) du véhicule automobile tourne à une vitesse prédéterminée sensiblement constante, et alors que le ventilateur (7) associé à l'évaporateur (6) est commandé de telle sorte qu'il transfère l'écoulement d'air sensiblement constant ou même nul, en direction de l'évaporateur (6), et le compresseur (1) est alors désactivé,
- la valeur d'au moins une caractéristique prédéterminée de la courbe résultante de la pression du fluide (P_{H}) en amont et/ou (P_{L}) en aval du dispositif d'expansion (5) dans le temps est détectée, et
- cette caractéristique est comparée à une valeur de référence prédéterminée.

2. Procédé selon la revendication 1, selon lequel la caractéristique prédéterminée est la valeur maximale ou minimale (P_{Hmax}, P_{Lmin}) atteinte par la pression du fluide respectivement en amont ou en aval du dispositif d'expansion (5).

3. Procédé selon la revendication 1, selon lequel la caractéristique prédéterminée est fonction du ou égale au rapport entre la valeur maximale ou minimale (P_{Hmax}, P_{Lmin}) atteinte par la pression du fluide respectivement en amont ou en aval du dispositif d'expansion (5), et la valeur (P_{HO}; P_{LO}) prise par la pression avant l'activation du compresseur (1).

4. Procédé selon la revendication 2 ou la revendication 3, selon lequel la valeur maximale (P_{Hmax}) atteinte par la pression du fluide (P_{H}) en aval du condenseur (3) est détectée.

5. Procédé selon la revendication 2 ou la revendication 3 pour un système (CS), dans lequel un filtre de fluide (4) est disposé à la sortie du condenseur (3), et dans lequel la valeur maximale (P_{Hmax}) atteinte par la pression du fluide dans le filtre (4) est détectée.

6. Procédé selon la revendication 2 ou la revendication 3, dans lequel la valeur maximale (P_{Lmin}) atteinte par la pression du fluide (P_{L}) au voisinage de l'entrée ou de la sortie de l'évaporateur (6) est détectée.

7. Procédé selon la revendication 2 ou la revendication 3, dans lequel la valeur minimale (P_{Lmin}) atteinte par la pression du fluide (P_{L}) au voisinage de l'entrée du compresseur est détectée.

8. Procédé selon la revendication 1, selon lequel la caractéristique prédéterminée est fonction de, ou du temps de relaxation de, la pression du fluide (P_{H}, P_{L}) en amont ou en aval du dispositif d'expansion (5), après la désactivation du compresseur (1).

9. Système pour contrôler le niveau de remplissage d'un système de climatisation (CS) d'un véhicule automobile, qui comprend un circuit fluidique, incluant :
- un compresseur (1) qui peut être raccordé au moteur à combustion interne (E) du véhicule automobile et dont la sortie est raccordée à un condenseur (3), et
- un évaporateur (6), auquel est associé un ventilateur (7) et dont l'entrée est raccordée à la sortie du condenseur (3) au moyen d'un dispositif d'expansion de fluide (5) et dont la sortie est raccordée à l'entrée du compresseur (1),
le système étant **caractérisé en ce qu'**il comprend :
- une unité de commande (ECU), qui peut déclencher une activation commandée du compresseur (1) alors que le moteur (E) du véhicule automobile tourne à une vitesse prédéterminée sensiblement constante, et alors que le ventilateur (7) est commandé de telle sorte qu'il transfère l'écoulement d'air sensiblement constant ou même nul, en direction de l'évaporateur (6), puis exécuter la désactivation du compresseur (1),
- des moyens formant capteur (9) pour envoyer à l'unité de commande (ECU) des signaux électriques indicatifs de la pression de fluide (P_{H}, P_{L}) en amont et/ou en aval du dispositif d'expansion (5),
- l'unité de commande (ECU) étant agencée de manière à détecter au moins une caractéristique de la courbe de la pression de fluide en amont et/ou en aval du dispositif d'expansion (5) dans le temps, ce qui conduit à l'activation du compresseur (1), et comparer cette caractéristique à une valeur de référence prédéterminée.

10. Système selon la revendication 9, dans lequel la caractéristique prédéterminée est la valeur maximale ou minimale(P_{Hmax}, P_{Lmin}) atteinte par la pression du fluide respectivement en amont ou en aval du dispositif d'expansion (5).

11. Système selon la revendication 9, dans lequel la caractéristique prédéterminée est fonction du ou égale au rapport entre la valeur maximale ou minimale (P_{Hmax}, P_{Lmin}) atteinte par la pression du fluide respectivement en amont ou en aval du dispositif d'expansion (5), et la valeur (P_{HO}; P_{LO}) prise par la pression avant l'activation du compresseur (1).

12. Système selon la revendication 10 ou la revendication 11, dans lequel les moyens formant capteurs (9) sont agencés de manière à envoyer des signaux indicatifs de la pression du fluide (P_{H}) en aval du condenseur (3).

13. Système selon la revendication 10 ou la revendication 11, pour un système dans lequel un filtre à fluide (4) est disposé à la sortie du condenseur (3) et dans lequel les moyens formant capteur (9) sont associés au filtre (4).

14. Système selon la revendication 10 ou la revendication 11, dans lequel l'unité de commande (ECU) est agencée de manière à détecter la valeur minimale atteinte par la pression du fluide au voisinage de l'entrée ou de la sortie de l'évaporateur (6).

15. Système selon la revendication 10 ou la revendication 11, dans lequel l'unité de commande (ECU) est agencée de manière à détecter la valeur minimale atteinte par la pression du fluide au voisinage de l'entrée du compresseur (1).

16. Système selon la revendication 9, dans lequel la caractéristique prédéterminée est fonction de ou du temps de relaxation de la pression du fluide (P_{H}, P_{L}) en amont ou en aval du dispositif d'expansion (5) après la désactivation du compresseur (1).
